# EUROPEAN PATENT APPLICATION

(11) **EP 1 236 589 A2**
(43) Date of publication of application: **04.09.2002**
(21) Application number: 02075247.3
(22) Date of filing: 21.01.2002
(51) Int. Cl.: B60C 25/138

(54) **Improved implement for demounting and mounting self-supporting tyres of the system pax type and the like**

(30) Priority: 28.02.2001 IT RE010007 U
(71) Applicant: Societa' Italiana Costruzioni Elettromeccaniche - S.I.C.E. - S.P.A., 42015 Correggio (Reggio Emilia) (IT)
(72) Inventor: Vignoli, Giuliano, 42015 Corregio (Reggio Emilia) (IT)
(74) Representative: Corradini, Corrado

(57) **Abstract**

Improved implement for demounting and mounting those self-supporting tyres which comprise a tyre with beads of different diameters and a support ring to be inserted into the well in the wheel rim, this latter being provided with seats for receiving the different-diameter beads of the tyre, the implement comprising a wheel rim support device to be associated with the self-centering unit of a tyre removal machine, and a tool secured to said support device and arranged to interact with the tyre bead.

## Description

This invention relates to a implement intended to be associated with a usual tyre removal machine to enable the operator to mount onto and demount from a respective wheel rim a new type of self-supporting pneumatic tyre, such as that produced by the firm Michelin and known as "System Pax".

The self-supporting tyres of System Pax type and the like enable the vehicle to travel with safety even when the inflation pressure assumes a very low value, as happens in the case of a puncture.

In addition to the tyre itself, said tyres essentially comprise a relatively rigid ring of elastomeric material, which is inserted into the well of the wheel rim and rests against an annular projection thereon.

To enable the tyre and the support ring to be mounted on the wheel rim, both the tyre and the wheel rim are formed with particular profiles.

Specifically, the tyre beads have different diameters, with the result that the wheel rim is non-symmetrical about a plane perpendicular to its axis, and presents seats for receiving the different-diameter beads. Moreover, to prevent the tyre beads escaping from the bead retaining flanges on the wheel rim when the vehicle travels with a punctured tyre, the profile of the tyre bead and of the matching seat present in the wheel rim are of a particular design.

The means with which tyre removal machines of known type are provided are unable to operate on this type of tyre, for which reason the manufacturers of these machines have constructed special implements able to operate in combination with tyre removal machines of traditional type.

One of these implements is described in Utility Model patent application No. RE98U000044 in the name of the same applicant, to which reference should be made for a detailed description.

Essentially, said implement comprises a wheel rim support device to be associated with the self-centering unit of the tyre removal machine. Said support device is composed of a disc which is gripped by the jaws with which the self-centering unit of the tyre removal machine is provided, and from which there rises an upperly threaded vertical shaft on which a cylindrical member is mounted, against which the wheel rim hub rests when the threaded shaft has been inserted into the central hole of the hub. The wheel rim is locked by means of known type, namely a centering cone and a quick-action locking nut.

The aforesaid implement also comprises a roller of horizontal axis the purpose of which, during the mounting of the tyre onto the wheel rim, is to press against the side-wall of the tyre while the wheel rim is rotating, in order to facilitate the mounting of the tyre and of the toroidal ring onto the wheel rim.

Using the described implement, the tyre is mounted by the following operations:
- The wheel rim is locked onto the appropriate support device, being careful to position the wheel rim edge of smaller diameter upwards;
- The tyre and relative ring are mounted on the wheel rim using the already described roller, in order to urge the ring into its seat;
- The tyre lower bead lying in the wheel rim well is extracted and positioned beyond the lower edge of the wheel rim;
- The lower bead is inserted into its bead retention seat present on the tyre;
- Finally the smaller-diameter bead is inserted into the bead retention seat of the tyre.

The larger-diameter bead is extracted to the outside of the wheel rim by the operator using a suitable lever which he inserts into the well of the wheel rim between the bead and the well.

The known implement has proved suitable for the purpose if operating on wheels having a diameter not exceeding 400 mm. In this respect, with wheels of larger diameter, the greater rigidity of the tyre bead makes it difficult to extract the tyre bead from the wheel rim well, and to then insert the tyre bead into the corresponding seat in the wheel rim. These difficulties are particularly accentuated when operating on the larger diameter of the wheel rim and tyre, because of the working position in which the operator has to act by virtue of the fact that said diameter faces the plate of the machine self-centering unit.

An object of the present invention is to overcome the aforesaid drawbacks within the framework of a rational and reliable solution, which simplifies the operations required of the operator and accelerates them.

The invention attains this and further objects by means of a implement having the characteristics defined in the claims.

The operational and constructional characteristics of the invention will be apparent from the ensuing description of a preferred embodiment thereof given by way of non-limiting example and illustrated in the accompanying drawings.

Figure 1 is a partial side view of a tyre removal machine on which the implement of the invention, shown partly sectioned, is installed.

Figure 2 is the view from II of Figure 1.

Figure 3 is a partial perspective view of one of the components of the implement of the invention.

Figures 4 and 6 show in succession the steps involved in mounting the tyre on the wheel rim using the machine of the invention.

Figure 5 is the view from V of Figure 4.

Said figures show the self-centering unit 1 extending upwards from the base 2 of a tyre removal machine 3.

The self-centering unit 1 comprises a usual plate 4 provided with jaws 5 for gripping the support and locking device 6 for a wheel 7, this latter comprising the wheel rim 8, the tyre 9 and the ring 10 of elastomeric material.

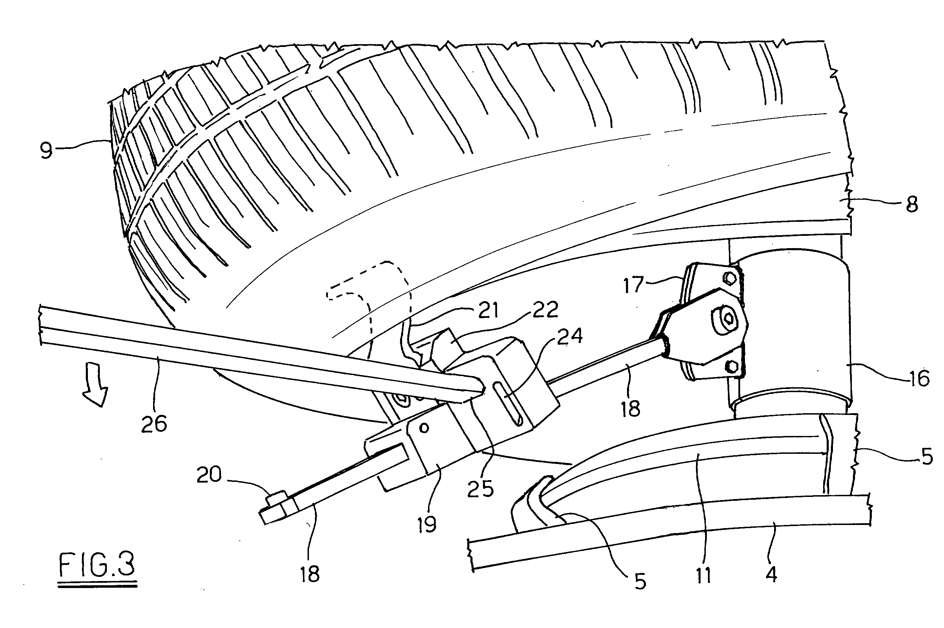

The support and locking device 6 for the wheel 7 comprises a lower circular member 11 in the shape of an inverted dish, the edge of which is intended to be gripped by the jaws 5 of the self-centering unit 1. Said member centrally supports a vertical shaft 12, the upper portion 120 of which is threaded; below the threaded portion, the shaft 12 supports a cup member 13 against which the hub 80 of the wheel rim 8 rests when mounted on the shaft 12. The wheel rim 8 is locked onto the support device 6 by a centering cone 14 and a quick-locking nut 15, of known type. Below the cup-shaped member 13, the shaft 12 presents an annular sunken portion containing a cylindrical bush 16 free to rotate about the axis A of the support device 6. Said bush 16 consists of two identical semi-cylindrical parts, each of which is provided with lugs 17, said two parts being joined together by usual screws to form the cylindrical bush 16. With reference to Figure 3, a rod 18 of rectangular cross-section is hinged to one of the lugs 17, and is free to rotate within the plane of the axis A of said support device 6.

A block 19 is mounted and freely slidable on said rod 18 and is prevented from escaping from the rod 18 by a stop 20 positioned at the free end of the rod. A hook-shaped tool 21 is associated with the block 19, to interact with the edge of the lower bead of the tyre 9 during the mounting of the tyre on the wheel rim 8. In detail, said tool 21 is fixed to a profiled member 22 hinged to the block 19 and hence free to undergo partial rotations with respect to the block. The member 22 is also provided on one side with a portion 23 presenting two seats 24 and 25 for receiving a lever 26 used by the operator while mounting the tyre 9 on the wheel rim, as clarified hereinafter.

It should be noted that the axis of the seat 24 is orientated downwards from the axis of the rod 18, in the direction of the axis A of the support unit 6, and that the axis of the seat 25 is orientated upwards from the axis of the rod 18, in the direction of the axis A of the support unit 6.

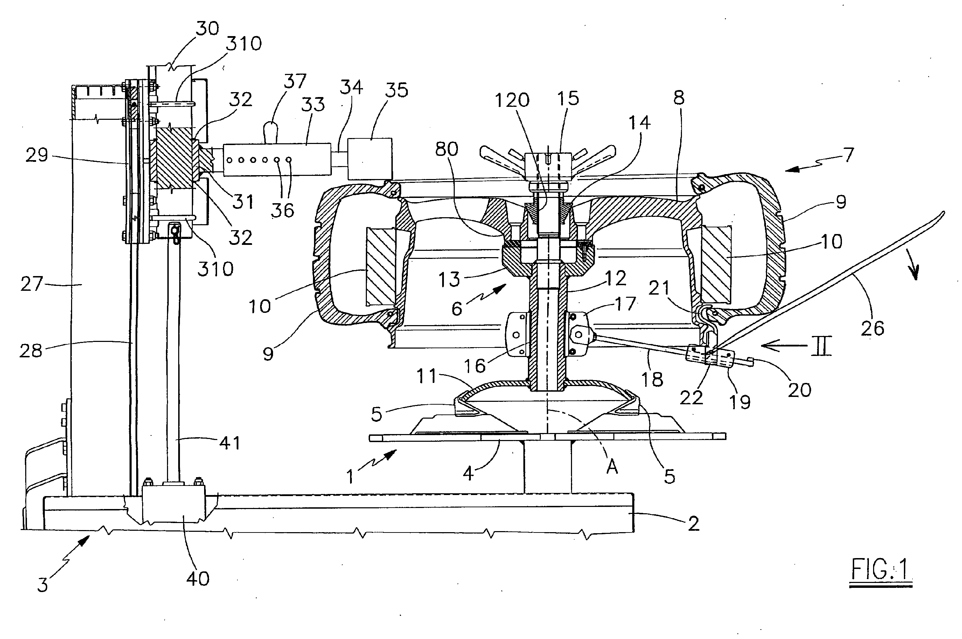

With reference to Figures 1, 4 and 6, a vertical column 27 projects upwards from the rear of the base 2 of the tyre removal machine, and is provided with a guide 28 on which there slides a slide 29 supporting a cylinder 30 fixed to the slide 29 by two locking elements 310 of horseshoe shape.

The slide is driven with vertical translation by a cylinder-piston unit 40, the piston rod 41 of which is fixed to the lower end of the cylinder 30.

About the cylinder 30 the is mounted a sleeve 31 free to rotate about the cylinder 30 but axially locked by two rings 32 fixed to the cylinder 30. The sleeve 31 supports an internally hollow cylindrical member 33 of horizontal axis internally containing a rod 34, the free end of which carries an idle roller 35 arranged to interact with the side-wall of the tyre or with the edge of the tyre bead while the tyre is being mounted on the wheel rim.

The lateral surface of the member 33 comprises a series of holes 36 into which there is inserted a pin 37, one end of which is inserted into a hole, not shown, present in the rod 34 to prevent axial translation of the rod. It should be noted that each of the holes 36 corresponds to a determined diameter of the wheel rim on which the operation is to be carried out.

To the upper end of the cylinder 30 there is secured an arm 38 which is free to rotate about the cylinder 30 and carries at its free end a second arm 39 which in its turn is free to rotate with respect to the arm 38. The axis of rotation of the arm 39 coincides with the axis A of the support device for the wheel 7. On the arm 39 there is mounted a sleeve 42 lowerly carrying a member 43 arranged to press against the side-wall of the tyre during the mounting operation.

The member 43 consists of a vertical rod 44, to the lower end of which there is fixed a pad of elastomeric material.

The operation of the invention is described hereinafter with the aid of the accompanying drawings.

To mount the tyre 9 and ring 10 on the wheel rim 8, the wheel rim 8 is firstly positioned on the support device 6 and then locked in position by the centering cone 14 and the quick locking nut 15. It should be noted that to be able to carry out the mounting operation the smaller diameter edge of the wheel rim must be facing upwards as shown in the figures.

With reference to Figure 1, when the wheel rim has been locked in position the tyre and the ring 10 are drawn over the wheel rim, the roller 35 being used to facilitate positioning of the ring. For this purpose the distance between the roller 35 and the sleeve 31 is adjusted on the basis of the wheel rim diameter, after which the sleeve is rotated to bring the roller above the side-wall of the tyre. The cylinder-piston unit 40 is then used to lower the roller 35 such that it exerts a certain force on the side-wall of the tyre. The self-centering unit 1 is then rotated so that the roller 35 urges the tyre 9 and ring 10 downwards.

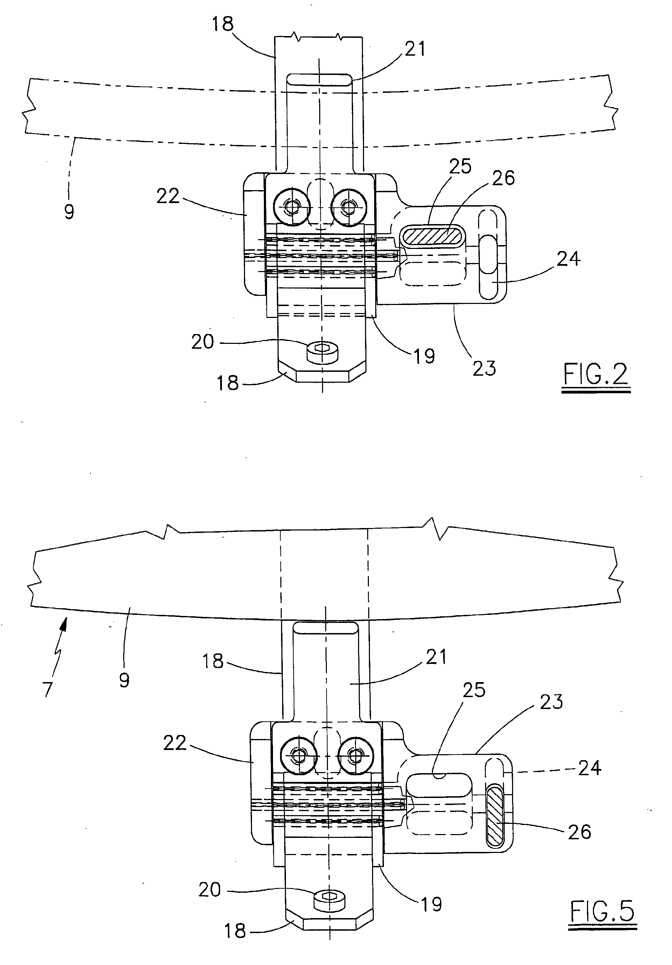

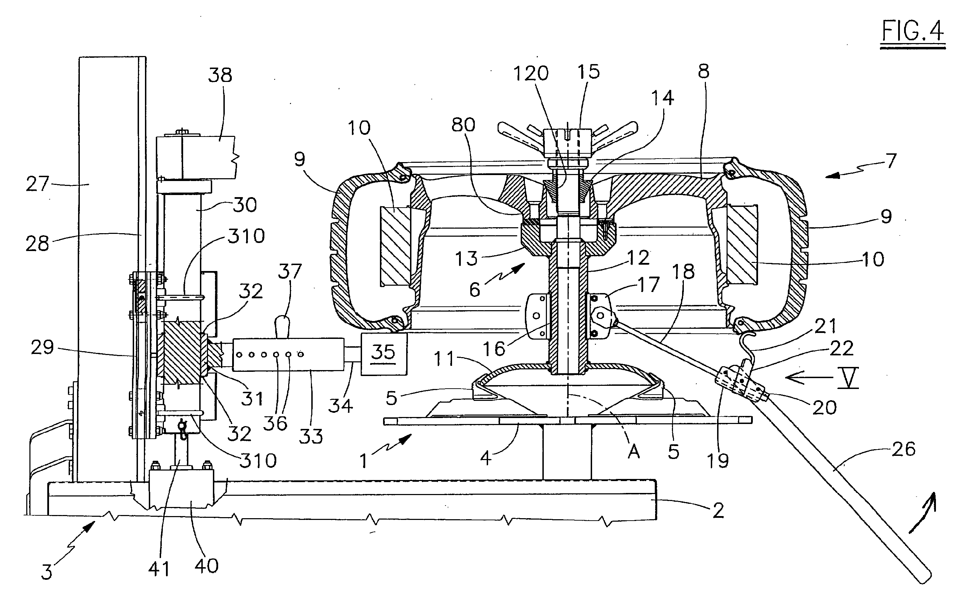

At this point the tyre lower bead has to be extracted from the well in the wheel rim. To achieve this the operator uses the hook-shaped tool 21. With reference to Figure 1 the operator raises the tool until it grips the inner edge of the lower bead of the tyre 9, and then, as also shown in Figure 2, he inserts the lever 26 into the appropriate seat 25 present in the block 22 which supports the tool. The operator then rotates the self-centering unit 1 and simultaneously thrusts the lever downwards as indicated in Figure 1. This operation enables the tyre bead to be extracted from the well in the wheel rim and to move it below the bead retaining flange, as shown in Figure 4.

The operator has then to return the tyre lower bead into the appropriate seat in the wheel rim. For this purpose he uses the tool 21 in combination with the roller 35.

Specifically, he firstly positions the roller as shown in Figure 4. i.e. such that it acts on the lower bead of the tyre 9, then he inserts the lever 26 into the seat 24 in the block 22, and raises it such as to press the outer edge of the tool 21 against the tyre bead. Simultaneously he rotates the self-centering unit and continues to maintain the tool pressed against the edge of the wheel rim to facilitate insertion of the lower bead into the matching seat present in the wheel rim 8.

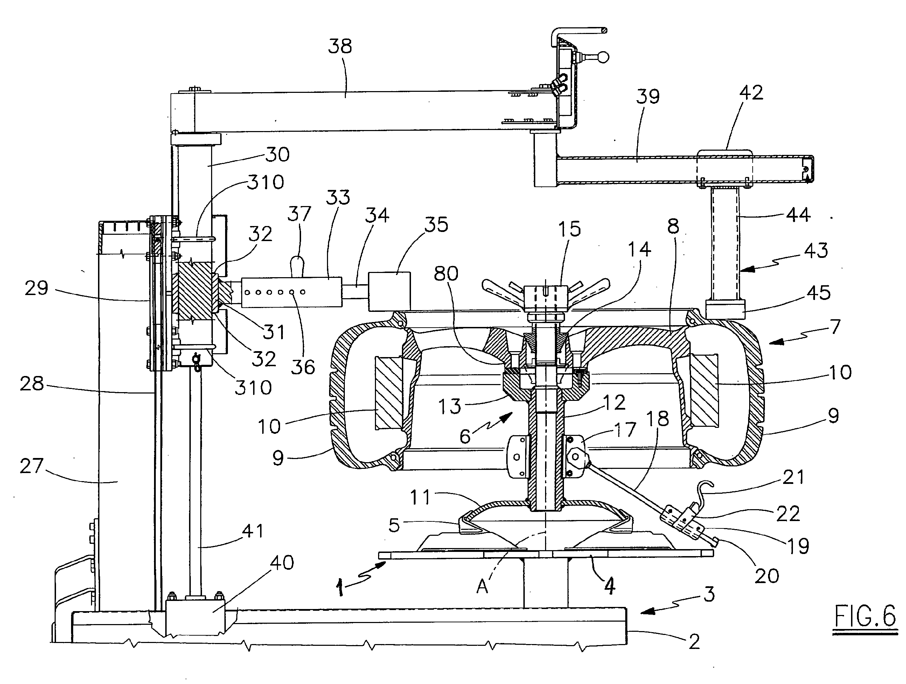

With reference to Figure 6, the smaller-diameter tyre bead is inserted into the matching seat present in the wheel rim by using both the roller 35 and the member 43. Specifically, the roller 35 is positioned at the tyre bead and the arm 38 is rotated such as to bring its free end onto the axis A of the support device. The pad 45 of the member 43 is then positioned on the side-wall of the tyre, immediately downstream of the roller 35 in the direction of rotation of the self-centering unit 1, and the cylinder-piston unit 40 is lowered so that the roller 35 and the member 43 exert a certain force on the bead and on the side-wall of the tyre respectively. The self-centering unit 1 is then rotated, and during rotation the roller 35 inserts the tyre bead into its seat in the wheel rim, the member 43 rotating rigidly with the wheel rim to maintain the bead inserted into the bead retention seat of the wheel rim.

The tyre and the ring 10 are demounted from the wheel rim very easily. In this respect, when the deflated wheel 7 has been locked in position, the roller 35 is merely positioned against the side-wall of the tyre at the larger diameter bead, and the self-centering unit 1 then rotated. At the same time the roller 35 is made to rise by the cylinder-piston unit 40. In this manner the tyre and ring are removed from the wheel rim 8 while the self-centering unit 1 rotates.

## Claims

1. Improved implement for demounting and mounting those self-supporting tyres which comprise a tyre with beads of different diameters and a support ring to be inserted into the well in the wheel rim, this latter being provided with seats for receiving the different-diameter beads of the tyre, the implement comprising a wheel rim support device to be associated with the self-centering unit of a tyre removal machine, **characterised by** comprising a tool secured to said support device and arranged to interact with the tyre bead.

2. An implement as claimed in claim 1, **characterised in that** said tool interacts with the larger-diameter bead of the tyre.

3. An implement as claimed in claim 1, **characterised in that** said tool can rotate about the axis of said support device to which it is secured.

4. An implement as claimed in claim 1, **characterised in that** said tool can rotate within the plane containing the axis of said support device to which it is secured.

5. An implement as claimed in claim 1, **characterised in that** the distance between said tool and said support device can be adjusted.

6. An implement as claimed in claim 1, **characterised in that** said tool is associated with a block which can slide on a rod hinged to said support device.

7. An implement as claimed in claim 6, **characterised in that** said rod can rotate about the axis of said support device.

8. An implement as claimed in claim 6, **characterised in that** said rod can rotate within the plane of the axis of said wheel rim support device.

9. An implement as claimed in claim 6, **characterised in that** said block presents at least one seat for receiving the end of a lever manoeuvred by the operator.

10. An implement as claimed in one or more of the preceding claims, **characterised in that** said tool is hook-shaped.

11. An implement as claimed in claim 10, **characterised in that** the concave inner surface of said hook has a profile such as to grip the inner edge of the tyre bead.

12. An implement as claimed in claim 10, **characterised in that** the outer upper surface of said hook is shaped in such a manner as to interact with the outer edge of the tyre bead.

13. An implement as claimed in claim 1, **characterised by** comprising at least one roller of horizontal axis arranged to interact with the side-walls or with the bead of the tyre.

14. An implement as claimed in claim 13, **characterised in that** said roller can be adjusted in height by a cylinder-piston unit with which it is associated.

15. An implement as claimed in claim 1, **characterised by** comprising a thrust member arranged to interact with the side-wall of the tyre.

16. An implement as claimed in claim 15, **characterised in that** the distance of said thrust member from the vertical axis of the wheel rim is adjustable.

17. An implement as claimed in claim 15, **characterised in that** said thrust member can be adjusted in height.

18. An implement as claimed in claim 17, **characterised in that** the height adjustment is made by a cylinder-piston unit.

19. An implement as claimed in claim 1, **characterised in that** said thrust member can rotate about the vertical axis of the wheel rim support device.
